# FASCICULE DE BREVET EUROPEEN

(11) **EP 1 582 171 B1**
(45) Date de publication et mention de la délivrance du brevet: **23.07.2008**
(21) Numéro de dépôt: 04007524.4
(22) Date de dépôt: 29.03.2004
(51) Int. Cl.: A61C 3/02, A61C 5/02

(54) **Instrument dentaire à usage unique**
Einweg dentales Instrument
No reusable dental instrument

(43) Date de publication de la demande: 05.10.2005
(73) Titulaire: Maillefer Instruments Holding S.A.R.L., 1338 Ballaigues (CH)
(72) Inventeur: Aeby, Francois, 1442 Montagny (CH); Capt, Michel, 1337 Vallorbe (CH)
(74) Mandataire: Micheli & Cie SA

(56) Documents cités:
- WO-A-98/37819
- US-A- 2 606 366
- US-A- 3 665 372
- US-A- 4 951 690
- US-A- 5 617 258
- US-A- 5 897 318

## Description

La présente invention concerne un instrument dentaire à usage unique.

On sait que les praticiens médicaux ont pour obligation d'utiliser des instruments stériles pour traiter leurs patients, ceci afin d'éviter les contaminations d'un patient à l'autre par des agents pathogènes.

Ces instruments stériles peuvent être soit à usages multiples, auquel cas l'instrument est restérilisé par le praticien après chaque utilisation, soit à usage unique.

Dans le cas des instruments dentaires, plus particulièrement des instruments de traitement du canal radiculaire (instruments endodontiques), il arrive que la partie active, généralement souple, de l'instrument se casse après un certain nombre d'utilisations, obligeant le praticien à effectuer des opérations délicates pour récupérer la ou les parties restant dans la bouche du patient. Avec des instruments à usage unique, sont réduits non seulement le risque de contamination d'un patient due à une stérilisation mal effectuée mais également le risque de rupture de l'instrument. On comprend donc l'intérêt croissant porté à ce genre d'instruments.

La présente invention vise à augmenter encore la sécurité d'utilisation des instruments dentaires, en empêchant, ou au moins en rendant plus difficile, la restérilisation ou la désinfection par le praticien d'un instrument à usage unique en vue d'une réutilisation de celui-ci.

On connaît par le document WO 98/37819 un dispositif chirurgical comportant une partie qui se déforme si elle est stérilisée pour empêcher une réutilisation du dispositif.

La présente invention prévoit un instrument dentaire à usage unique comprenant une partie active et un manche, caractérisé en ce qu'il comprend une partie de fixation constituée par une résine adhésive servant à fixer le manche à la partie active et en ce que cette partie de fixation se détruit sous l'effet d'au moins l'une des stérilisations suivantes : stérilisation par chaleur sèche, stérilisation par autoclave et stérilisation à l'oxyde d'éthylène, de sorte à désolidariser le manche de la partie active.

La présente invention prévoit également un instrument dentaire à usage unique comprenant une partie active et un manche, le manche comprenant une partie d'extrémité destinée à s'encliqueter dans une pièce d'entraînement, caractérisé en ce que la partie d'extrémité est collée au reste du manche par une résine adhésive et en ce que cette résine adhésive se détruit à une température de stérilisation donnée, de sorte à désolidariser la partie d'extrémité du reste de l'instrument.

La présente invention prévoit également un instrument dentaire à usage unique comprenant une partie active et un manche, le manche comprenant un noyau et une gaine entourant le noyau, caractérisé en ce que le noyau et la gaine sont solidarisés l'un à l'autre par une ou plusieurs goupilles et en ce que cette ou ces goupilles fondent sous l'effet de la température à laquelle se pratique la stérilisation, de sorte à désolidariser le noyau et la gaine.

D'autres caractéristiques et avantages de la présente invention apparaîtront à la lecture de la description détaillée suivante faite en référence aux dessins annexés dans lesquels :
- la figure 1A est une vue plane, partiellement coupée, d'un instrument dentaire selon un mode qui n'est pas couvert par les revendications;
- la figure 1B est une vue en coupe de l'instrument dentaire prise suivant la ligne I-I de la figure 1A ;
- la figure 2A est une vue plane, partiellement coupée, d'un instrument dentaire selon un mode qui n'est pas couvert par les revendications ;
- la figure 2B est une vue en coupe de l'instrument dentaire prise suivant la ligne II-II de la figure 2A ;
- les figures 3 et 4 sont des vues planes, partiellement coupées, d'un instrument dentaire selon des modes d'exécution sortant de l'invention, respectivement ;
- les figures 5A et 5B sont des vues planes, partiellement coupées, d'un instrument dentaire selon un mode sortant de l'invention, respectivement dans un état normal et dans un état altéré après stérilisation ;
- les figures 6 à 8 sont des vues planes, partiellement coupées, d'un instrument dentaire selon des sixième à huitième modes d'exécution de l'invention.

En référence aux figures annexées, un instrument dentaire endodontique selon l'invention comprend une tige 1 constituant la partie active de l'instrument et, à l'extrémité postérieure de la tige 1, un manche 2 destiné à s'engager et à s'encliqueter par sa partie d'extrémité postérieure 2a dans une pièce d'entraînement (non représentée), appelée « contre-angle », connectée à un moteur rotatif.

Une partie de l'instrument dentaire selon l'invention est conçue pour s'altérer sous l'effet d'au moins un type de stérilisation ou de désinfection couramment utilisé par les praticiens, par exemple la stérilisation par chaleur sèche, par autoclave ou à l'oxyde d'éthylène. Cette partie altérable est située en un endroit choisi pour que, après son altération, l'instrument soit rendu inutilisable. Par « inutilisable » on entend que l'instrument ne peut plus être utilisé dans les conditions d'utilisation pour lesquelles il était prévu.

Ainsi, par exemple, la partie altérable peut être réalisée dans un matériau ne résistant pas à la température à laquelle se pratique un type de stérilisation donné et/ou à un agent de désinfection donné, ou être conçue pour changer de forme et/ou de dimensions dans des conditions de température et/ou d'humidité données.

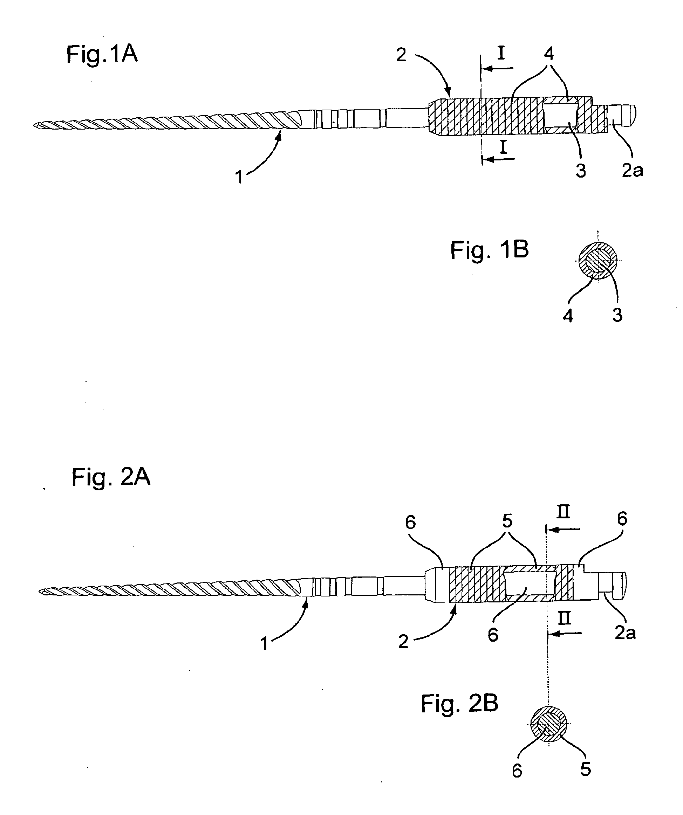

Dans le mode d'exécution des figures 1A et 1B, le manche 2 comprend un corps ou noyau métallique 3 formé d'un seul tenant avec la tige 1 et une gaine 4 surmoulée autour du corps métallique 3, cette gaine 4 constituant la partie altérable de l'instrument. La gaine 4 est typiquement réalisée en un matériau dont le point de fusion est inférieur à environ 90°C, de sorte qu'elle se dégrade aux températures de stérilisation à l'oxyde d'éthylène (environ 90°C), de stérilisation par autoclave (environ 134°C) ou de stérilisation par chaleur sèche (environ 180°C). Des matériaux pouvant convenir à cet effet sont le polyéthylène à haute densité (PE-HD), le chlorure de polyvinyle (PVC), le polystyrole (PS) et le styrole acrynitrile (SAN). En variante, la gaine 4 peut être réalisée en un matériau se dégradant sous l'action des agents de désinfection courants. Comme exemples de tel matériau on peut citer les polyvinyles tendres (PVC tendres).

La stérilisation ou la désinfection par un praticien de l'instrument illustré aux figures 1A, 1B aura ainsi pour effet de réduire le diamètre du manche 2, lequel pourra certes être engagé dans la pièce d'entraînement mais, n'y étant plus correctement guidé, sera brinquebalant si bien que le praticien devra renoncer à la réutilisation de l'instrument.

Le mode d'exécution des figures 2A, 2B est basé sur le même principe que celui des figures 1A, 1B, et diffère de ce dernier simplement en ce que la gaine est sous la forme d'une bague 5 surmoulée dans une gorge correspondante ménagée sur la circonférence d'un corps métallique 6 du manche.

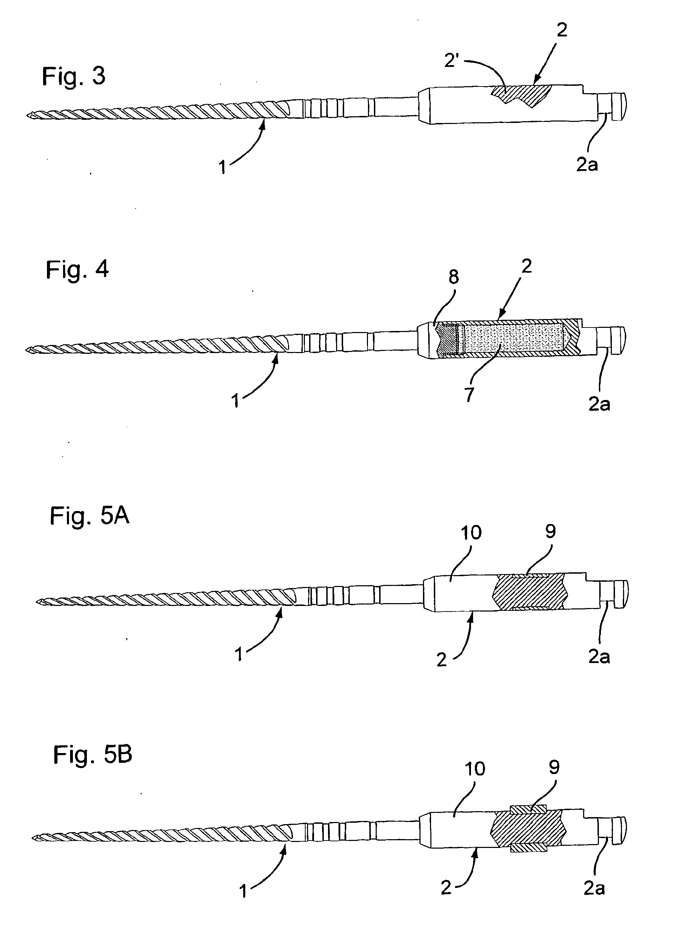

A la figure 3, le manche 2 tout entier est réalisé dans une matière 2' ne résistant pas à au moins un type de stérilisation ou de désinfection.

Dans le mode d'exécution illustré à la figure 4, le manche 2 comprend un cavité 7 remplie d'un liquide et fermée par un bouchon 8 constituant la partie antérieure du manche 2. Le liquide est par exemple de l'eau. Sous l'effet de la chaleur de stérilisation, il augmentera de volume, augmentant ainsi le diamètre du manche 2. Ce dernier ne pourra alors plus s'engager dans la pièce d'entraînement.

Dans le mode d'exécution des figures 5A et 5B, le manche 2 comprend une bague 9 logée dans une gorge correspondante ménagée sur la circonférence du corps 10 du manche. La bague 9 est réalisée dans une matière hydrophile telle que le polyamide (PA). En situation normale (figure 5A), la bague 9 affleure la surface du corps 10 du manche. Dans des conditions d'humidité telles que celles auxquelles se pratique la stérilisation par autoclave, la bague 9 gonflera par absorption d'eau (figure 5B), augmentant ainsi localement le diamètre du manche ce qui empêchera ce dernier de s'engager dans la pièce d'entraînement.

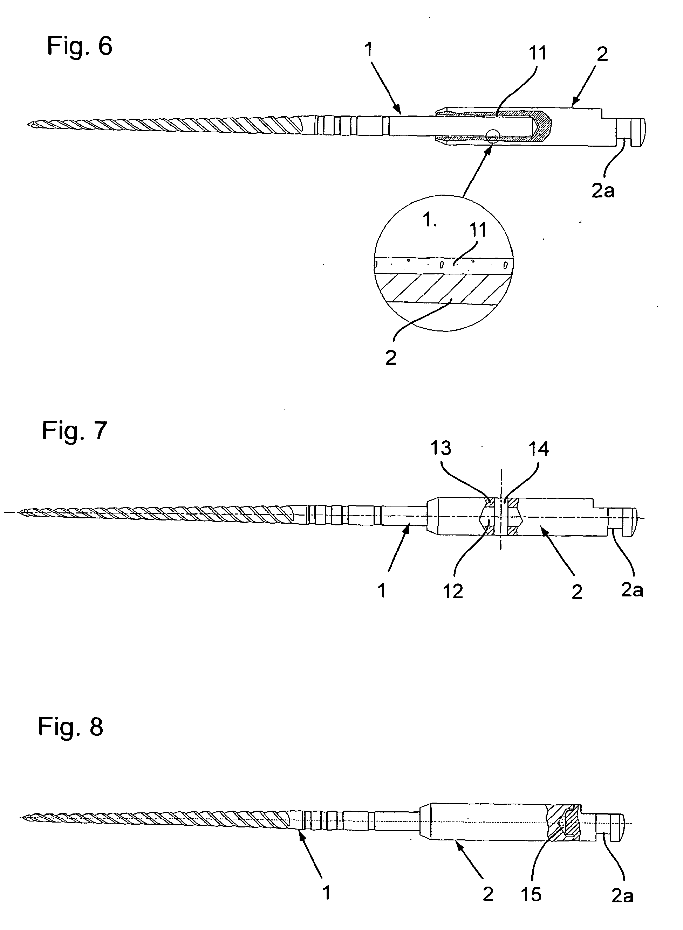

Dans le mode d'exécution de la figure 6, la partie postérieure de la tige 1 est emmanchée dans le manche 2 et retenue dans celui-ci par une couche de résine adhésive 11, par exemple de type cyanoacrylate. La matière dont est constituée la couche 11 est choisie pour ne pas résister à la température à laquelle se pratique au moins un type de stérilisation. Ainsi, sous l'effet de la stérilisation, cette couche 11 se détruira ce qui entraînera la désolidarisation du manche 2 et de la tige 1.

Dans le mode d'exécution de la figure 7, le manche 2 comprend un noyau 12 et une gaine 13 entourant le noyau 12 selon un assemblage gras. Le noyau 12 et la gaine 13 sont solidarisés l'un à l'autre par une ou plusieurs goupilles 14 réalisées en une matière ne résistant pas à la température à laquelle se pratique au moins un type de stérilisation. Pendant la stérilisation, ces goupilles 14 fonderont ce qui désolidarisera le noyau 12 et la gaine 13.

Enfin, dans le mode d'exécution de la figure 8, la partie d'extrémité 2a destinée à s'encliqueter à l'intérieur de la pièce d'entraînement est collée au reste du manche 2 par l'intermédiaire d'une résine adhésive 15 qui se détruit à une température de stérilisation donnée, désolidarisant ainsi la partie d'extrémité 2a du reste de l'instrument.

L'instrument dentaire selon l'invention est bien entendu stérilisé avant sa commercialisation, d'une manière qui ne l'altère pas. Un type de stérilisation convenant à cet effet est la stérilisation par rayonnement gamma. Celle-ci se pratique dans des conditions auxquelles résistent les exemples d'instrument décrits ci-dessus.

Bien que l'invention ait été décrite pour un instrument dentaire destiné à être connecté à une pièce d'entraînement associée à un moteur rotatif, on comprendra que le principe de cette invention peut également s'appliquer à des instruments manuels, dont le manche est destiné à être tenu par des doigts du praticien. Dans un tel cas d'instrument manuel, des modes d'exécution comparables à ceux exposés aux figures 3 et 6, dans lesquels la fonction du manche n'est plus assurée après la stérilisation, peuvent notamment être envisagés.

## Revendications

1. Instrument dentaire à usage unique comprenant une partie active (1) et un manche (2), **caractérisé en ce qu'**il comprend une partie de fixation (11) constituée par une résine adhésive servant à fixer le manche (2) à la partie active (1) et **en ce que** cette partie de fixation (11) se détruit sous l'effet d'au moins l'une des stérilisations suivantes : stérilisation par chaleur sèche, stérilisation par autoclave et stérilisation à l'oxyde d'éthylène, de sorte à désolidariser le manche (2) de la partie active (1).

2. Instrument dentaire à usage unique comprenant une partie active (1) et un manche (2), le manche (2) comprenant une partie d'extrémité (2a) destinée à s'encliqueter dans une pièce d'entraînement, **caractérisé en ce que** la partie d'extrémité (2a) est collée au reste du manche (2) par une résine adhésive (15) et **en ce que** cette résine adhésive (15) se détruit à une température de stérilisation donnée: de sorte à désolidariser la partie d'extrémité (2a) du reste de l'instrument.

3. Instrument dentaire à usage unique comprenant une partie active (1) et un manche (2), le manche (2) comprenant un noyau (12) et une gaine (13) entourant le noyau, **caractérisé en ce que** le noyau (12) et la gaine (13) sont solidarisés l'un à l'autre par une ou plusieurs goupilles (14) et **en ce que** cette ou ces goupilles (14) fondent sous l'effet de la température à laquelle se pratique la stérilisation, de sorte à désolidariser le noyau (12) et la gaine (13).

4. Instrument selon la revendication 1, **caractérisé en ce que** la résine adhésive est de type cyanoacrytate.

5. Instrument selon l'une quelconque des revendications 1 à 4, **caractérisé en ce qu'**il consiste en un instrument endodontique.

## Claims

1. Disposable dental tool with an active segment (1) and a handle (2), **characterised in that** it comprises a fastening segment (11) consisting of an adhesive resin serving to fasten the handle (2) to the active segment (1), and **in that** this fastening segment (11) is destroyed under the effect of at least one of the following sterilisations: sterilisation by dry heat, autoclave sterilisation, and sterilisation with ethylene oxide, so that the handle (2) will separate from the active segment (1).

2. Disposable dental tool with an active segment (1) and a handle (2), the handle (2) comprising a terminal segment (2a) intended to be engaged in a driving piece, **characterised in that** the terminal segment (2a) is glued to the rest of the handle (2) with an adhesive resin (15), and **in that** this adhesive resin (15) is destroyed at a given temperature of sterilisation, so that the terminal segment (2a) will separate from the rest of the tool.

3. Disposable dental tool with an active segment (1) and a handle (2), the handle (2) comprising a core (12) and a sheath (13) surrounding the core, **characterised in that** the core (12) and the sheath (13) are held together by one or several pins (14), and **in that** this or these pins (14) melt under the effect of the temperature at which the sterilisation is performed, so that the core (12) and the sheath (13) separate from each other.

4. Tool according to claim 1, **characterised in that** the adhesive resin is of the cyanoacrylate type.

5. Tool according to any one of claims 1 to 4, **characterised in that** it consists of an endodontal tool.

## Patentansprüche

1. Zahnärztliches Werkzeug zum Einmalgebrauch mit einem aktiven Abschnitt (1) und einem Griff (2), **dadurch gekennzeichnet, dass** es einen Befestigungsabschnitt (11) umfasst, der aus einem Klebharz besteht, das dazu dient, den Griff (2) am aktiven Abschnitt (1) zu befestigen, und **dadurch**, dass dieser Befestigungsabschnitt (11) unter der Wirkung zumindest eines der folgenden Sterilisationsverfahren zerstört wird: Heissluftsterilisation, Heissdampfsterilisation und Sterilisation mit Ethylenoxid, so dass der Griff (2) vom aktiven Abschnitt (1) getrennt wird.

2. Zahnärztliches Werkzeug zum Einmalgebrauch mit einem aktiven Abschnitt (1) und einem Griff (2), wobei der Griff (2) einen Endabschnitt (2a) umfasst, der dazu bestimmt ist, in ein Antriebsteil einzurasten, **dadurch gekennzeichnet, dass** der Endabschnitt (2a) mit einem Klebharz (15) an den übrigen Griff (2) angeklebt ist, und **dadurch**, dass dieses Klebharz (15) bei einer gegebenen Sterilisationstemperatur zerstört wird, so dass der Endabschnitt (2a) vom übrigen Werkzeug getrennt wird.

3. Zahnärztliches Werkzeug zum Einmalgebrauch mit einem aktiven Abschnitt (1) und einem Griff (2), wobei der Griff (2) einen Kern (12) und eine den Kern umgebende Hülle (13) umfasst, **dadurch gekennzeichnet, dass** der Kern (12) und die Hülle (13) mittels eines oder mehrerer Stifte (14) miteinander verbunden sind, und **dadurch**, dass dieser Stift oder diese Stifte (14) unter dem Einfluss der Temperatur, bei der die Sterilisation erfolgt, schmelzen, so dass sich der Kern (12) und die Hülle (13) voneinander lösen.

4. Werkzeug nach Anspruch 1, **dadurch gekennzeichnet, dass** das Klebharz vom Cyanacrylattyp ist.

5. Werkzeug nach einem der Ansprüche 1 bis 4, **dadurch gekennzeichnet, dass** es aus einem endodontischen Instrument besteht.
